Europäisches Patentamt

(19) European Patent Office

Office européen des brevets

(11) Numéro de publication : **0 165 146**
**B1**

(12) **FASCICULE DE BREVET EUROPÉEN**

(45) Date de publication du fascicule du brevet :
01.02.89

(51) Int. Cl.⁴ : **H 01 S   3/09**

(21) Numéro de dépôt : **85400987.5**

(22) Date de dépôt : **20.05.85**

(54) **Laser à électrons libres perfectionné.**

(30) Priorité : 21.05.84 FR 8407898

(43) Date de publication de la demande :
18.12.85 Bulletin 85/51

(45) Mention de la délivrance du brevet :
01.02.89 Bulletin 89/05

(84) Etats contractants désignés :
AT BE CH DE GB IT LI LU NL SE

(56) Documents cités :
GB—A— 2 065 363
US—A— 3 822 410
NUCLEAR INSTRUMENTS AND METHODS IN PHY-
SICS RESEARCH, vol. 208, no. 1/3, avril 1983, pages
171-176, Amsterdam, NL; D.A.G. DEACON: "Storage
ring free electron lasers: experimental progress and
future prospects"

(73) Titulaire : **CENTRE NATIONAL DE LA RECHERCHE
SCIENTIFIQUE (CNRS)
15, Quai Anatole France
F-75007 Paris (FR)**

(72) Inventeur : **Billardon, Michel
27, rue A. Hovelacque
F-75013 Paris (FR)**
Inventeur : **Petroff, Yves
49, rue Jeanne d'Arc
F-94160 Saint-Mande (FR)**
Inventeur : **Ortega, Jean-Michel
5, place de Rungis
F-75013 Paris (FR)**
Inventeur : **Elleaume, Pascal
29, place Jeanne d'Arc
F-75013 Paris (FR)**
Inventeur : **Bazin, Claude
5, avenue de la Cure d'Air
F-91400 Orsay (FR)**
Inventeur : **Bergher, Maurice
59, rue de la Hacquinière
F-91440 Bures Sur Yvette (FR)**
Inventeur : **Veighe, Michel
22, Domaine de Miremont
F-91190 Gif Sur Yvette (FR)**
Inventeur : **Deacon, Dave A.G.
754 Duncardine Way
Sunnyvale California 94087 (US)**
Inventeur : **Madey, John M.J.
2120 Amherst Street
Palo Alto California 94306 (US)**

(74) Mandataire : **Plaçais, Jean-Yves et al
Cabinet Netter 40, rue Vignon
F-75009 Paris (FR)**

## Description

L'invention concerne les lasers à électrons libres.

A la différence des lasers classiques, dans lesquels on excite des électrons qui appartiennent à des atomes, les lasers à électrons libres utilisent le rayonnement synchrotron : une particule chargée engendre un rayonnement électromagnétique lorsqu'elle est accélérée.

Ainsi, un laser à électrons libres comprend tout d'abord des moyens accélérateurs de particules chargées, comprenant une section en ligne droite, et agencés pour amener périodiquement dans cette section en ligne droite un paquet d'électrons (ou positrons) portés à une énergie relativiste. Sur cette section en ligne droite est monté coaxialement un onduleur. Un onduleur est défini ici comme une structure, magnétique le plus souvent, qui est propre à moduler de manière répétitive dans l'espace l'accélération des électrons qui passent selon son axe. Ceci leur fait engendrer un faisceau de lumière sensiblement colinéaire à l'axe de l'onduleur. Enfin, une cavité optique, définie par deux miroirs montés en regard l'un de l'autre de part et d'autre de l'onduleur, permet l'aller-retour de lumière qui se trouve ainsi émise.

Avec un tel dispositif, on a pu récemment obtenir une amplification laser à photons cohérents, ou plus brièvement un « effet laser ». Les premières expériences ont été réalisées en lumière infrarouge, avec un onduleur monté sur un accélérateur linéaire (D.A.G. Deacon et al., Phys. Rev. Lett. 38, 892, 1977, Stanford). Plus récemment encore, le laboratoire pour l'utilisation du rayonnement électromagnétique (LURE) à Orsay a pu obtenir un effet laser dans le domaine visible, à partir d'un faisceau d'électrons circulant dans un anneau de stockage (M. Billardon et al., Phys. Rev. Lett. 51, 1652, 1983).

Les lasers à électrons libres présentent des avantages significatifs, par rapport aux lasers actuellement utilisés industriellement. On attend en effet des lasers à électrons libres une puissance ou une intensité supérieure à celle des lasers classiques. Ils présentent de plus la possibilité d'être accordés d'une manière continue dans un vaste domaine de longueur d'onde ou fréquences lumineuses.

Toutefois, les premières expériences ont montré que l'effet laser est difficile à obtenir, et plus encore à maîtriser, compte tenu notamment de certains aspects erratiques des phénomènes observés jusqu'à présent.

La présente invention vise à résoudre les difficultés ainsi rencontrées, et à permettre la réalisation de lasers à électrons libres qui soient susceptibles d'être appliqués directement au laboratoire et, le cas échéant, dans l'industrie.

Les lasers à électrons libres considérés comprennent, comme défini plus haut :

des moyens accélérateurs de particules chargées de type bouclé, comprenant un anneau de stockage desdites particules possédant au moins une section en ligne droite, et agencés pour amener périodiquement dans cette section un paquet d'électrons ou positrons portés à une énergie relativiste,

un onduleur monté coaxialement le long de cette section en ligne droite, et propre à moduler de manière répétitive dans l'espace l'accélération des électrons qui y passent, ce qui leur fait engendrer un faisceau de lumière sensiblement colinéaire à l'axe de l'onduleur, et

une cavité optique définie par deux miroirs montés en regard l'un de l'autre, de part et d'autre de l'onduleur, pour permettre l'aller-retour de la lumière qui est ainsi émise,

si bien qu'une amplification laser à photons cohérents peut apparaître lorsque la période de cet aller-retour de lumière coïncide avec la période de passage des paquets d'électrons et que le gain optique par passage de paquets d'électrons dépasse les pertes de lumière intervenant dans la cavité optique entre deux passages.

Il est noté au passage que les accélérateurs de particules fonctionnent aussi bien avec les électrons qu'avec les positrons, qui sont les homologues des électrons avec la charge de signe contraire. Les deux types de particules appartiennent d'ailleurs à la classe des leptons chargés. La lumière est définie ici comme un rayonnement électromagnétique comprenant non seulement le domaine visible, mais aussi les domaines de longueurs d'onde voisins, tant dans l'infrarouge proche ou lointain que dans les ultraviolets (ultraviolet dit « à vide »), voire même les rayons X. Enfin, il est question ci-dessus d'une coïncidence entre la période des allers et retours de lumière et la période de passage des paquets d'électrons. Il va de soi que cette coïncidence peut être obtenue non seulement lorsque les périodes sont égales, mais aussi lorsqu'elles sont multiples entières l'une à l'autre, ou toutes deux multiples entières d'une même durée de temps.

Dans une définition très générale, l'invention prévoit des moyens d'ajustement, agissant sur le laser pour faire varier de manière contrôlée dans le temps l'interaction électrons/photons, ces moyens procédant à un premier état dans lequel ils altèrent les conditions optimales pour l'amplification laser, et un second état dans lequel ils rétablissent les mêmes conditions, ce qui permet un asservissement du laser, en même temps qu'une amélioration de l'un au moins des paramètres comprenant l'amplitude de crête des impulsions laser, sa stabilité, le taux de répétition des impulsions laser, et sa stabilité.

Selon un autre aspect de l'invention, les deux états sont alternés, de préférence de manière périodique ou quasi périodique.

La durée du premier état est choisie en fonction de caractéristiques des paquets d'électrons, et notamment d'un temps de relaxation observé pour ceux-ci. Ainsi, cette durée peut être choisie suffisamment longue pour augmenter l'amplitude de crête des macro-impulsions du laser, qui interviennent pendant le second état.

La durée du second état peut, pour sa part, être rendue inférieure à la durée naturelle des macro-impulsions du laser, ce qui permet d'augmenter le taux de répétition des impulsions laser.

Pour certaines applications, il n'y a pratiquement aucune amplification laser durant le premier état.

Pour d'autres applications, il demeure une amplification laser moindre, dans le premier état, ce qui permet une modulation du laser.

Dans de telles réalisations, les moyens d'ajustement peuvent agir sur l'une au moins des caractéristiques des paquets d'électrons, qui comprennent leur géométrie, leur dispersion énergétique, et leur trajectoire dans l'onduleur.

Les moyens d'asservissement peuvent encore agir sur le taux de répétition des paquets d'électrons.

Dans le cas particulier d'un anneau de stockage, les moyens d'ajustement peuvent faire intervenir une cavité haute fréquence, incorporée à l'anneau de stockage, et recevant un signal de commande externe de haute fréquence.

Dans un mode de réalisation particulier, les moyens d'ajustement comportent des moyens propres à décaler sur commande l'axe de passage moyen des électrons relativement à l'axe de l'onduleur. De tels moyens peuvent utiliser l'application d'un champ électrique et/ou magnétique, commutable sur commande, aux paquets d'électrons.

Il est également envisageable que les moyens d'ajustement agissent sur l'une au moins des caractéristiques optiques de la cavité, qui comprennent sa longueur, la direction de son axe optique, et ses pertes.

Pour sa part, l'onduleur comprend avantageusement une structure magnétique périodique, qui s'étend selon l'axe de la cavité optique, et procure un champ magnétique stationnaire réglable en amplitude, et de période spatiale choisie.

Dans une application particulière, les moyens d'asservissement réagissent à un signal représentatif de l'un des paramètres du fonctionnement du laser, moyennant quoi l'asservissement se fait non pas à partir d'un signal extérieur, mais comme une contre-réaction sur le laser lui-même.

D'autres caractéristiques et avantages de l'invention apparaîtront à l'examen de la description détaillée ci-après, et des dessins annexés, sur lesquels :

la figure 1 est un schéma de principe d'un laser à électrons libres selon l'invention utilisant un anneau de stockage ;

la figure 2 est le schéma de principe d'un onduleur utilisé dans le dispositif de la figure 1 ;

la figure 3 est un schéma montrant le rayonnement synchrotron d'un électron soumis à un champ magnétique transverse ;

les figures 4A et 4B illustrent le rayonnement produit par cet électron, respectivement dans un repère tridimensionnel lié à l'électron, et dans un repère fixe tel que celui du laboratoire ;

la figure 5 illustre l'allure générale d'un rayonnement synchrotron ;

les figures 6A et 6B sont deux diagrammes relatifs aux macro-impulsions du laser à électrons libres ;

les figures 7A et 7B sont deux autres figures montrant le fonctionnement en macro-impulsions, sur une échelle de temps plus étendue ;

la figure 8 est un schéma partiel illustrant un mode de réalisation particulier des moyens d'ajustement ;

les figures 9A à 9D sont des diagrammes temporels illustrant le rôle des moyens d'ajustement ;

les figures 10, 10A et 10B sont des reproductions de formes d'ondes relatives à une expérience particulière ;

les figures 11A à 11C sont des diagrammes temporels illustrant un autre mode de fonctionnement des moyens d'ajustement selon l'invention ;

la figure 12 illustre une autre variante de réalisation des moyens d'ajustement ; et

les figures 13, 14 et 15 illustrent encore d'autres variantes des moyens d'ajustement.

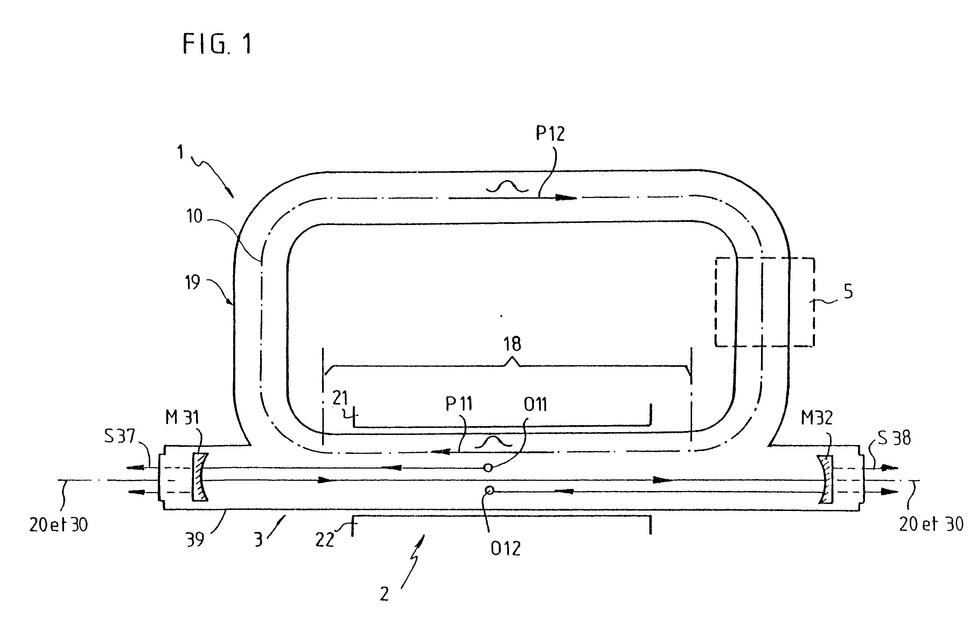

Sur la figure 1, la référence 1 désigne un anneau de stockage de particules chargées, également appelé anneau de collision, d'après d'autres applications d'un tel anneau. Un tel anneau peut être défini comme un circuit fermé, comportant des parties rectilignes interconnectées par des aimants ou électro-aimants dont la fonction est d'incurver la trajectoire des particules, afin de la conformer en boucle. L'axe de la trajectoire des particules est défini par le trait tireté 10. L'ensemble de l'anneau est bien entendu sous vide, à l'intérieur d'une paroi 19.

Dans la présente invention, il circule à l'intérieur de l'anneau, le long de l'axe 10, un ou plusieurs paquets d'électrons. Dans l'exemple illustré, sont utilisés deux paquets d'électrons P11 et P12, qui se présentent à 180° l'un de l'autre (il est usuel de définir la phase des paquets d'électrons le long de l'anneau d'après leur période de révolution dans celui-ci).

Dans l'anneau de collision d'Orsay, il est possible d'obtenir un faisceau d'électrons de structure pulsée, les impulsions ayant 0,3 à 1 nanoseconde de largeur. Le taux de répétition des impulsions dépend du diamètre de l'anneau et du nombre de paquets d'électrons injectés dans l'anneau (par des moyens non représentés). Dans l'exemple cité, le taux de répétition est de 27 MHz pour deux paquets d'électrons, ce qui correspond à une période temporelle de 37 nanosecondes (tandis que la période de révolution d'un même paquet est de 74 nanosecondes). L'énergie d'un électron dans le paquet est définie par une quantité $\gamma$ égale au rapport entre l'énergie effective E de l'électron, et son énergie au repos $moC^2$ où mo est la masse de l'électron et C la vitesse de la lumière. Dans le cas de l'anneau de collision d'Orsay, la quantité $\gamma$ est comprise entre 300 et 1000 environ.

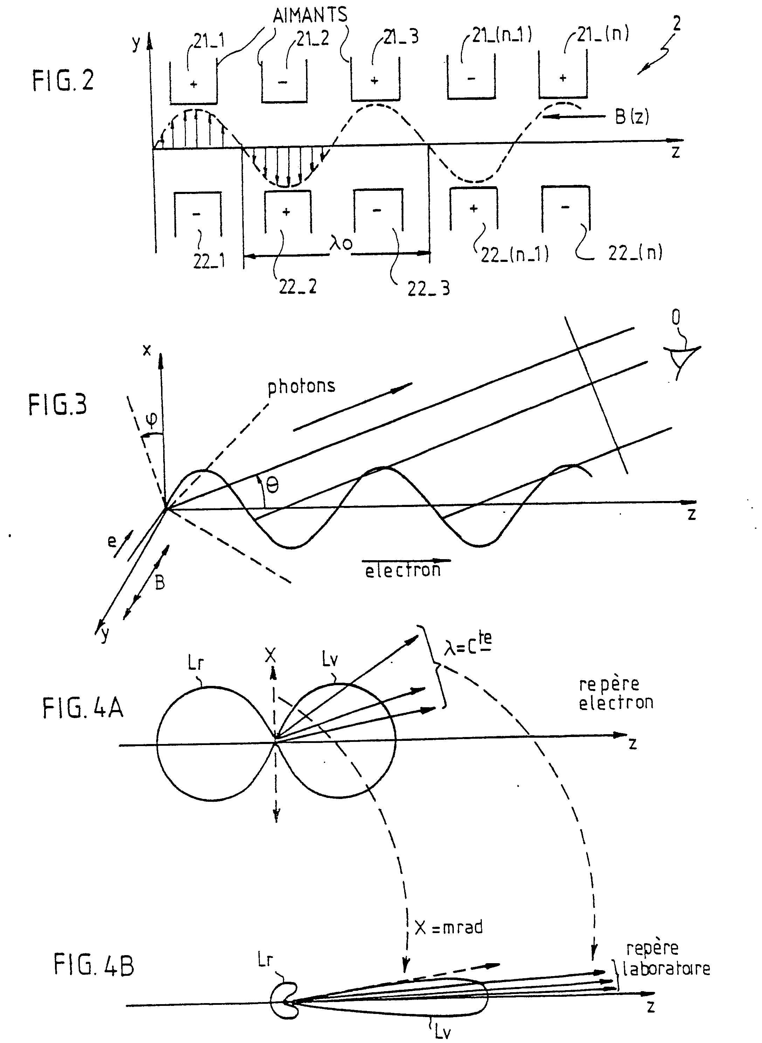

Un accélérateur tel que 1 possède une ou plusieurs sections en ligne droite, entre ses aimants de courbure. Sur l'une de ces sections est placé un onduleur 2, constitué d'une suite de pôles magnétiques 21 et 22 placés en regard les uns des autres, et de polarités opposées. La figure 2 illustre schématiquement comment un onduleur est constitué de paires de pôles tels que 21-1, 22-1, etc, 21-n, 22-n.

Dans le cas de l'anneau de collision d'Orsay, la longueur disponible en ligne droite 18 est de 1,30 mètre, et il a été possible d'y loger un onduleur à aimant permanent possédant 17 périodes spatiales consécutives et optimisé pour des électrons dont l'énergie était de 240 MeV. Pour améliorer les performances de l'onduleur, il s'est avéré souhaitable de le modifier, au moins partiellement, en le conformant en klystron optique. Ceci a été obtenu en remplaçant les trois périodes centrales de l'onduleur par un dispositif dit wiggler à trois pôles (section dispersive). Bien qu'un simple onduleur puisse être suffisant pour obtenir l'effet laser, sur une longueur suffisante, l'invention prévoit en conséquence que l'on utilise des onduleurs plus performants, comportant au moins pour partie un klystron optique, ou des moyens équivalents. Sur la figure 1, le trait d'axe noté 20 définit l'axe de l'onduleur 2. Il définit également, par sa référence 30, l'axe d'une cavité optique 3 délimitée par deux miroirs M31 et M32 ; légèrement concaves, et tournés l'un vers l'autre. Ces miroirs permettent l'aller-retour de faisceaux de lumière selon l'axe 20 et/ou 30. Ils comportent des pertes, dont une transmission de signaux lumineux vers l'extérieur, respectivement S37 pour le miroir M31 et S38 pour le miroir M32.

Comme on le verra plus loin, la longueur de la cavité optique définie entre les miroirs M31 et M32 est ajustée avec précision, autour d'une valeur proche de 5,50 mètres dans l'exemple choisi. La précision d'ajustement est meilleure que ± 5 microns.

L'anneau de stockage 1 est muni de moyens d'ajustement 5 en vue de faire varier l'interaction électrons/photons que l'on décrira plus en détail ci-après.

Il convient maintenant d'expliquer l'émission spontanée de lumière qui intervient dans un onduleur que traverse un électron.

Comme le montre la figure 2, l'onduleur 2 possède une structure magnétique spatialement périodique, à laquelle peut être associée une induction magnétique linéairement polarisée, définie par la relation suivante : $B(z) = B_0 \sin (2\pi z/\lambda_0)$ où $\lambda_0$ est la période de l'onduleur, $B_0$, l'induction magnétique maximum, et z l'axe de l'onduleur.

Il est maintenant fait référence à la figure 3. Si l'on fait propager un électron le long de l'axe z, cet électron adopte une trajectoire sinusoïdale dans le plan perpendiculaire au champ magnétique. L'électron peut alors être considéré comme un oscillateur se déplaçant le long de l'axe de l'onduleur, tout en émettant une onde électromagnétique. Des photons sont ainsi émis notamment dans la direction θ, et l'on peut les observer en O · φ désigne l'angle que forme la normale à la direction d'émission des photons avec l'axe x.

Avec les électrons de haute énergie que l'on peut obtenir dans les accélérateurs linéaires ou les anneaux de stockage (quelques centaines ou milliers de MeV), les caractéristiques du rayonnement sont déterminées par l'aspect relativiste du mouvement de l'électron. Elles dépendent d'abord de la quantité γ définie plus haut.

Si l'on se place (figure 4A) dans un référentiel qui se déplace le long de l'axe z avec la vitesse moyenne de l'électron considéré, l'onduleur est vu pratiquement par l'électron comme une onde électro-magnétique de période λ' peu différente de $\lambda_0/\gamma$, (transformation relativiste des champs). L'électron soumis à ce champ électromagnétique devient un oscillateur classique émettant la longueur d'onde λ'. Toujours dans un référentiel se déplaçant comme l'électron, les directions d'émission sont étendues à l'intérieur de lobes assez larges, Lv vers l'avant et Lr vers l'arrière.

Dans le repère du laboratoire (figure 4B), le diagramme de rayonnement est déterminé par une projection relativiste des angles. Il y a une projection vers l'avant (dans le sens du mouvement de l'électron) des angles du premier référentiel (figure 4A). L'axe X vient donc dans une position très faiblement inclinée sur l'axe z et confine ainsi la quasi-totalité du rayonnement vers l'avant dans un cône de quelques milliradians d'ouverture. Pour sa part, le lobe arrière Lr devient très faible.

La longueur d'onde d'émission est alors déterminée par l'effet Doppler, et pour le terme fondamental, il a été observé que l'on obtient sensiblement :

$$\lambda = \lambda_0/2\lambda^2 \ (1 + K^2/2 + \gamma^2\theta^2)$$

où $K = e \ B_0\lambda_0/2\pi m_0 c$ caractérise le champ magnétique, et varie typiquement entre 0 et 2,5, tandis que θ est l'angle d'émission de la lumière par rapport à l'axe de propagation de l'électron.

Il s'avère ainsi que l'émission spontanée des onduleurs constitue une source lumineuse de très faible divergence, qui peut être rendue presque monochromatique, puisque sa largeur spectrale est déterminée par le nombre de périodes de l'onduleur. De surcroît, cette émission lumineuse peut être accordée dans un large domaine spectral, en faisant varier l'énergie des électrons et/ou le champ magnétique. Enfin, la brillance spectrale de cette source lumineuse peut être de plusieurs ordres de grandeur supérieure à celle du rayonnement synchrotron classique. Cette source est donc particulièrement intéressante dans le domaine des rayons X (mous) et de l'ultraviolet à vide, tout en comportant des avantages dans les autres parties du spectre de rayonnement électromagnétique assimilable à de la lumière.

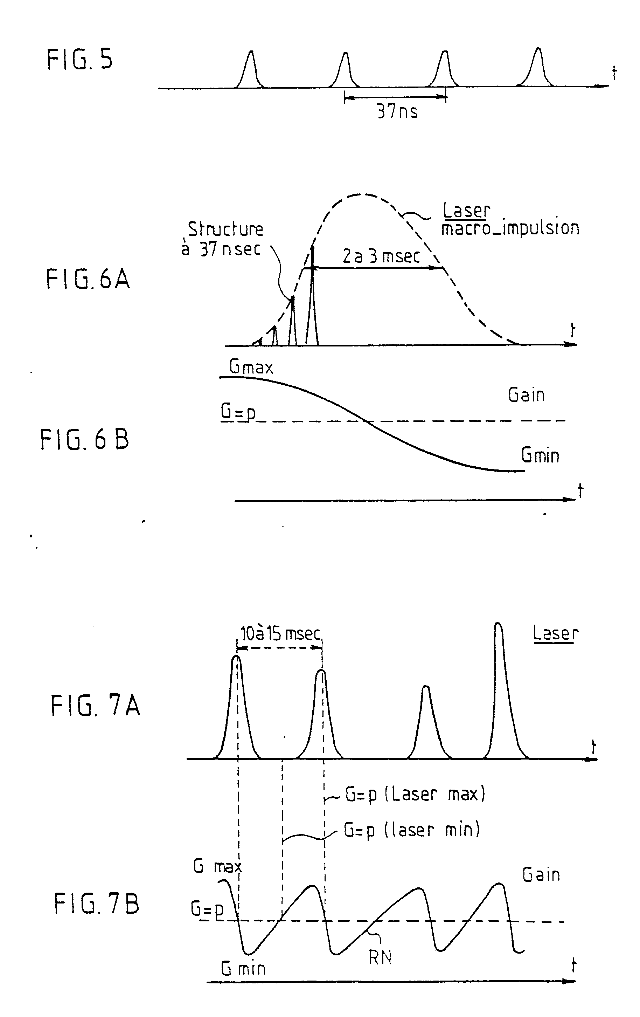

Il est maintenant fait référence à la figure 5, et il est rappelé que la période d'apparition des paquets d'électrons le long de l'onduleur 2 est de 37 nanosecondes. Les explications qui précèdent montrent donc que l'onduleur va émettre des paquets de photons espacés entre eux de 37 nanosecondes, ce qu'illustre précisément la figure 5. Chaque impulsion de photon possède une largeur d'environ 1 nanoseconde, pour deux paquets d'électrons dont la longueur est sensiblement d'une nanoseconde elle aussi.

Les photons ainsi créés sont stockés dans la cavité optique 3, qui est placée dans une chambre à vide délimitée par l'enceinte 39 et communiquant avec l'enceinte 19 de l'anneau de stockage. Il a été fait en sorte que les pertes de la cavité optique soient uniquement les pertes des miroirs, cette disposition étant importante si l'on veut dépasser le seuil de l'effet laser, compte tenu du faible gain que l'on peut obtenir dans un laser à électrons libres tel que décrit.

Par ailleurs, la longueur de la cavité optique, qui est voisine de 5,50 mètres, doit être ajustée avec précision pour synchroniser les impulsions de photons et les impulsions ou paquets d'électrons, car une variation de longueur de ± 5 microns provoque l'arrêt du laser.

Un premier effet laser a pu être observé, dans les conditions décrites dans l'article « First Operation of a Storage Ring Free Electron Laser », de M. Billardon et al. Phys. Rev. Lett. 1651, 1652 (1983) déjà cité. Les conditions opératoires mentionnées dans cet article sont incorporées à la présente description, pour permettre à l'homme de l'art une meilleure compréhension de l'invention, ainsi que des conditions requises pour obtenir l'effet laser, ainsi que pour contribuer à la définition de l'invention le cas échéant.

Pour la description de l'effet laser, il est maintenant fait référence aux figures 6A et 6B, ainsi que 7A et 7B.

La structure temporelle du laser est déterminée d'abord par la période de rotation des électrons. Le laser à électrons libres est donc pulsé à 27 MHz. La durée de ces impulsions élémentaires n'a pas encore été mesurée avec précision, mais il a pu être déterminé qu'elle est inférieure à 0,5 nanoseconde.

Sur une échelle de temps beaucoup plus longue, le laser n'est pas continu, mais adopte une nouvelle structure pulsée, dite à macro-impulsions.

Comme le montre la figure 6A, ces macro-impulsions ont une durée de 2 millisecondes environ, et une période de 10 à 30 millisecondes (figure 7A). Il a pu ainsi être établi par les inventeurs que l'interaction entre les photons et les électrons provoque une modification des caractéristiques du paquet d'électrons. Ceci conduit non seulement à un mécanisme de saturation de la puissance laser, mais également à une diminution du gain qui provoque l'arrêt de l'effet laser aussi longtemps que le paquet d'électrons n'a pas retrouvé une structure convenable.

Bien que les phénomènes en présence soient loin d'être entièrement expliqués, la figure 6B montre l'allure estimée de la variation du gain lié à l'effet laser, pendant la durée d'une macro-impulsion telle que celle de la figure 6A.

Il est rappelé tout d'abord que ce gain par passage est défini par la relation suivante :

$\Phi s/\Phi e = 1 + G$, où $\Phi s$ est le flux lumineux qui entre dans l'onduleur, et $\Phi e$ est le flux qui en sort après un passage dans l'onduleur.

Bien entendu, pour obtenir un effet laser, il faut satisfaire a priori les conditions suivantes :

La période de rotation des électrons dans l'anneau doit être synchronisée avec la période aller-retour des photons dans la cavité optique.

La trajectoire moyenne des électrons dans l'onduleur doit coïncider avec l'axe optique de la cavité. C'est ce qu'on a exprimé plus haut sous une forme différente : l'axe de l'onduleur doit coïncider avec l'axe de la cavité. Si cette condition n'est pas réalisée, les photons émis sont mal stockés dans la cavité, et les électrons n'interagissent plus aussi bien avec les photons.

C'est alors qu'intervient le gain optique, défini plus haut, qui dépend des deux conditions précédentes et de la densité électronique du paquet d'électrons, c'est-à-dire du courant moyen circulant dans l'anneau, ainsi que des dimensions transverses et longitudinales du paquet d'électrons.

Par ailleurs, le coefficient de réflexion des miroirs étant inférieur à 1, l'onde lumineuse perd une partie de son énergie à chaque réflexion. On appelle p le coefficient de perte de la cavité optique pour un aller-retour des photons, p étant la fraction d'énergie lumineuse perdue (plus généralement, cette quantité p serait définie sur plusieurs allers-retours si l'interaction électrons/photons ne se faisait pas à chaque aller-retour).

L'amplification optique dépend de la différence G —p. Si G est inférieur à p, il y a une amplification faible, tandis que si G est supérieur à p, on obtient l'effet laser. L'amplification optique est ici définie comme le rapport entre le flux lumineux qui sort de la cavité lorsqu'il y a du gain et le flux émis lorsqu'il n'y a pas de gain, c'est-à-dire

$$A = \theta(G \neq 0)/\theta(G=0)$$

Il s'avère ainsi que l'effet laser dépend des pertes de la cavité.

L'effet laser dépend aussi de l'énergie des électrons et de l'amplitude du champ magnétique.

Sur la figure 6B, on a associé à une macro-impulsion laser naissante sur la figure 6A un gain qui diminue d'une quantité Gmax à une valeur G = p, qui correspond sensiblement à la crête de la macro-impulsion. Par la suite, le gain diminue jusqu'à une valeur Gmin.

En d'autres termes, si à un instant donné le gain s'établit, chacune des micro-impulsions (figure 5) sera amplifiée à chaque passage aussi longtemps que le gain est supérieur aux pertes p, mais cette interaction des électrons et des photons conduit non seulement à une amplification, mais aussi à une modification des caractéristiques du faisceau d'électrons (modification de l'énergie des électrons, de leur vitesse, de la densité électronique par exemple), ce qui diminue le gain G au cours du développement de la macro-impulsion laser, dans une sorte de phénomène de saturation. Ainsi, lorsque G = p, le laser atteint sur la figure 6A sa puissance crête maximum, mais le gain continue à diminuer et devient inférieur aux pertes de sorte que la puissance laser diminue, et que la macro-impulsion tend à s'éteindre.

Par contre, il a été observé que lorsque le laser est arrêté, ou a diminué fortement de puissance, l'évolution des caractéristiques du faisceau d'électrons n'est plus déterminée par l'interaction avec la lumière, mais par les conditions de fonctionnement de l'anneau de stockage lui-même, qui tendent à redonner au paquet d'électrons sa structure « normale ». La structure normale peut être définie comme celle qui correspond au paquet de photons de la figure 5.

Le temps de relaxation que l'on observe ainsi dans le fonctionnement du laser est de l'ordre de 100 millisecondes, pour une énergie de 180 MeV, ce temps variant comme l'inverse de la puissance troisième de l'énergie. Au cours de cette relaxation, le gain augmente, et lorsqu'il atteint à nouveau la valeur G = p, une nouvelle macro-impulsion laser peut commencer à se développer.

Il en résulte alors une suite de macro-impulsions séparées de 10 à 15 millisecondes (ou plus) comme le montre la figure 7A. La figure 7B montre l'évolution estimée du gain pendant chacune des macro-impulsions de la figure 7A, ainsi que le temps de relaxation du laser, illustré par la remontée référencée RN (pour relaxation naturelle).

Ce type de fonctionnement, dû au mécanisme de saturation, a les conséquences suivantes :

Le laser est pulsé, et non pas continu (en dehors de la structure à 37 nanosecondes) et il adopte en général un caractère erratique puisque l'amplitude, la période et la largeur des macro-impulsions sont fluctuantes, voire extrêmement fluctuantes.

La puissance moyenne du laser est déterminée par ces mécanismes de saturation, et la puissance crête d'une macro-impulsion est aussi limitée par les mêmes mécanismes.

C'est à partir de ces observations que la présente invention vient proposer un fonctionnement différent d'un laser à électrons libres. Ce fonctionnement peut être appelé « laser asservi », et sera maintenant décrit.

Il a été observé en effet qu'un fonctionnement beaucoup plus stable peut être obtenu en provoquant artificiellement l'arrêt temporaire du laser, de préférence de façon périodique ou quasipériodique. Différents moyens permettent de réaliser cette condition :

Il est possible de désynchroniser les impulsions d'électrons et de photons, soit en changeant légèrement la période de rotation des paquets d'électrons dans l'accélérateur bouclé que constitue l'anneau de stockage, soit encore de décaler transversalement les paquets d'électrons par rapport à l'axe de la cavité optique, à l'aide d'un champ électrique ou magnétique par exemple, afin d'obtenir un mauvais recouvrement entre les photons et les électrons.

On peut encore modifier les pertes de la cavité optique, ou plus généralement le fonctionnement de celle-ci.

Le laser à électrons libres ainsi perfectionné peut fonctionner au coup par coup ou, de préférence, de façon périodique. Ce type de pilotage d'un laser à électrons libres est dénommé ici asservissement.

Avec un tel asservissement, on obtient un laser parfaitement stable du point de vue périodicité, assez stable en amplitude, sans perte appréciable de puissance moyenne, et avec des puissances de crête beaucoup plus importantes qu'en fonctionnement naturel.

Actuellement, le laser à électrons libres utilisant l'anneau de collision d'Orsay a pu être asservi sur n'importe quelle fréquence comprise entre 10 Hz et 1 kHz.

Bien entendu, ce pilotage du laser peut être défini plus généralement, comme un asservissement de son fonctionnement d'après l'apparition d'un événement qui est peut-être extérieur ou même lié au fonctionnement du laser. En d'autres termes, la présente invention permet non seulement de stabiliser la période du laser, mais aussi de réaliser d'autres types de fonctionnement tels que le « tir au coup par coup », la production d'un laser modulé, ou l'utilisation d'une contre-réaction sur le laser lui-même.

Une description plus détaillée en est donnée ci-après.

L'asservissement du laser peut se faire en agissant soit sur la synchronisation de la période de rotation des paquets d'électrons dans l'anneau avec la période d'aller-retour des photons dans la cavité optique, soit sur la coïncidence de la trajectoire des paquets d'électrons dans l'onduleur avec l'axe optique de la cavité, soit sur la densité électronique et les dimensions du paquet d'électrons, soit encore sur les pertes mêmes de la cavité.

L'exemple décrit ci-après intéresse principalement la modification de la période de rotation des électrons dans l'anneau de stockage, ce qui permet une augmentation de la puissance de crête du laser et une stabilisation de celui-ci, ou, en variante, la réalisation d'un laser modulé.

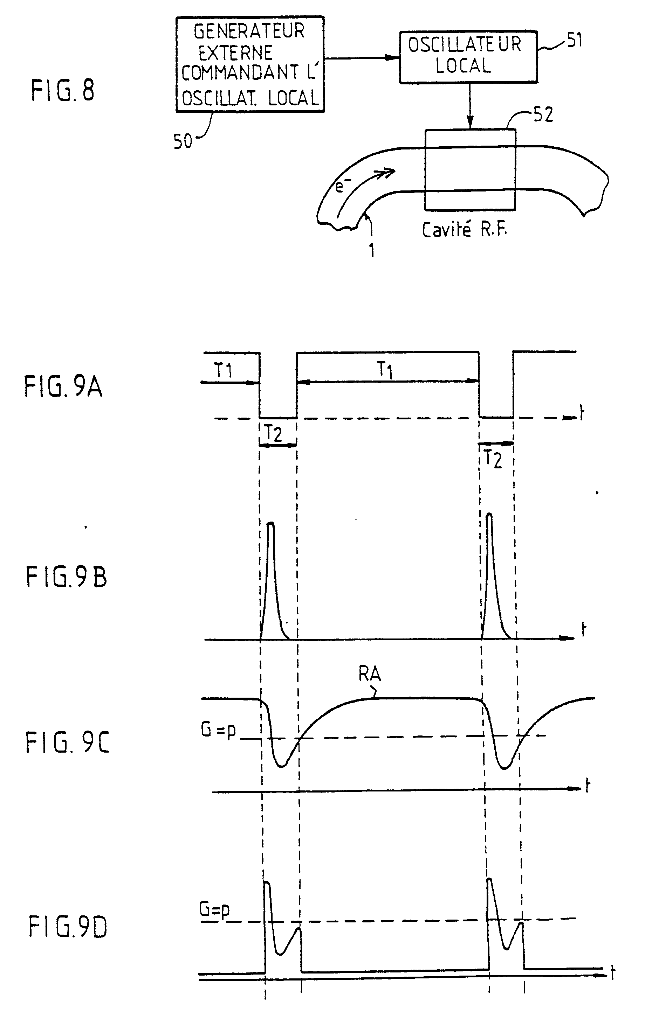

La figure 8 illustre une partie de l'anneau de stockage illustré en 1. Cet anneau de stockage est muni d'une cavité radiofréquence 52, reliée à un oscillateur local 51. La fréquence de rotation des électrons dans l'anneau de stockage est déterminé par la fréquence de l'oscillateur 51 qui alimente la cavité 52. On prévoit un générateur externe 50 qui agit sur l'oscillateur local 51, de manière à faire varier la fréquence de celui-ci, et par là la fréquence de rotation des paquets d'électrons dans l'anneau.

La modification de la fréquence est effectuée de préférence comme indiqué sur la figure 9A :

Pendant des intervalles de temps T1, la fréquence appliquée à la cavité est telle que la période de rotation des paquets d'électrons dans l'anneau soit désynchronisée par rapport à la période des allers-retours de photons dans la cavité optique 3 (figure 1). Dans ces conditions, il n'y aura pas d'effet laser. Dans la mesure où on part de l'état de repos du laser à électrons libres, la cavité optique 3 ne sera le siège que d'impulsions de photons du genre illustré sur la figure 5, avec une période légèrement différente de 37 nanosecondes puisque la fréquence a été modifiée. Pendant le temps T2, au contraire, on amène l'oscillateur local 51 sur la fréquence qui correspond exactement à la synchronisation de la période de rotation des paquets d'électrons dans l'anneau de stockage avec la période d'aller-retour des photons dans la cavité optique 3. Dans ces conditions, une impulsion laser se développe dans la cavité, de la manière illustrée sur les figures 6A et 6B. Mais le fonctionnement n'est plus le même que le fonctionnement naturel précédemment décrit. En effet, pendant les intervalles de temps T1, l'amplification laser est supprimée pendant un temps suffisamment long pour que les paquets d'électrons retrouvent leurs caractéristiques « normales », c'est-à-dire leur état normal, ou tout du moins que ces paquets d'électrons recouvrent un état qui corresponde à un gain d'interaction électrons/photons dans la cavité supérieure au gain Gmax du fonctionnement naturel (figures 6B et 7B).

En d'autres termes, pendant les intervalles de temps de durée T1, le ou les paquets d'électrons relaxent vers leur état normal à grand gain, de sorte que lorsqu'on rétablit la coïncidence des périodes des électrons et des photons (intervalle de temps T2), la construction d'une impulsion laser est assurée à partir d'un état à grand gain, et cette impulsion laser atteint une amplitude de crête importante avant que les phénomènes de saturation précédemment décrits n'aient diminué le gain. En fait, la puissance de crête obtenue sera d'autant plus importante que l'on aura su réaliser une différence importante entre le nouveau gain maximum ainsi obtenu et les pertes de la cavité optique qui, pour leur part, n'ont pas changé.

La figure 9A illustre une succession d'états T1 et T2 du signal de commande 50 de l'oscillateur 51. Pendant les états T1, la figure 9C montre que les paquets d'électrons atteignent un état qui correspondrait (si l'oscillation laser était possible) à un gain très élevé dans la cavité. A cet égard, la figure 9C est considérée par simplification comme une courbe de gain, mais il ne s'agit pas d'un véritable gain puisque le gain générateur d'effet laser n'existe pas pendant les intervalles de temps T1. C'est pourquoi la figure 9D limite les parties de la figure 9C aux instants où le gain existe, pendant les intervalles de temps T2. En ce sens, c'est seulement pour la figure 9D qu'il est légitime et rigoureux de parler du gain laser.

La figure 9B illustre la forme générale des impulsions laser obtenue pendant les intervalles de temps T2. On voit que la période de ces impulsions est tout à fait stabilisée, que leur amplitude de crête est très importante, et elle aussi beaucoup plus stable que précédemment.

Retournant brièvement à la figure 9C, on peut considérer que les portions de la courbe illustrée qui correspondant aux intervalles de temps T1, portions notées RA, correspondent à une relaxation artificielle du laser, beaucoup plus efficace que la relaxation naturelle RN apparaissant sur la figure 7B.

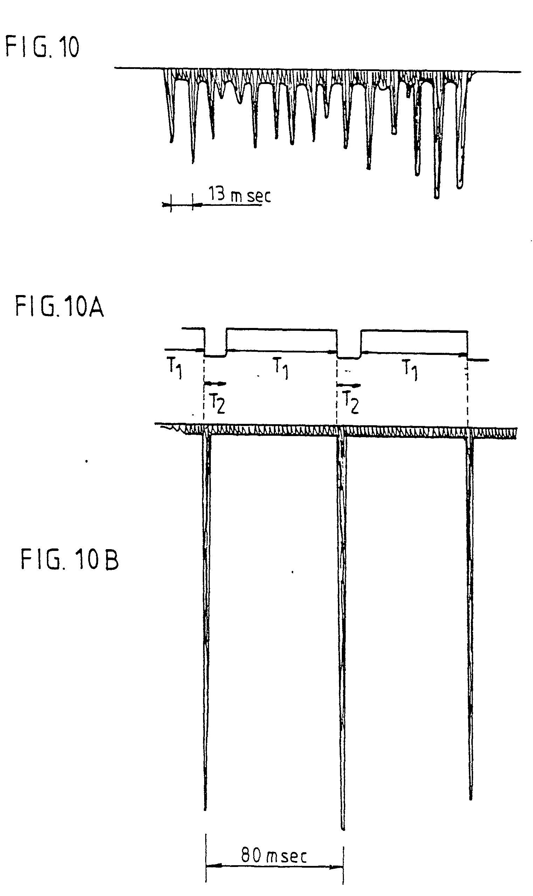

Les figures 10, 10A et 10B illustrent des courbes obtenues expérimentalement.

La figure 10 correspond à un effet laser naturel, c'est-à-dire sans les moyens de l'invention. On y remarque que la périodicité des impulsions laser (macro-impulsions) est assez variable, de même que leur amplitude. La période moyenne est de l'ordre de 13 millisecondes.

La figure 10A illustre l'allure d'un signal de commande SC qui peut être appliqué au générateur 50 pour faire varier la fréquence de rotation des paquets d'électrons dans l'anneau de stockage. Comme précédemment décrit, ce signal comporte des périodes P1 de désynchronisation, séparées par des périodes P2, ici plus brèves, de synchronisation. On remarque immédiatement que les impulsions laser produites, et illustrées sur la figure 10B, ont une période très stable définie par la période du signal SC, ici 80 millisecondes. Elles ont également une amplitude beaucoup plus importante que celle de la figure 10, et beaucoup plus stable. Les échelles verticales ne sont pas rigoureuses sur les deux figures, et les impulsions de la figure 10B sont à peu près vingt fois plus importantes que celles de la figure 10.

Le fonctionnement asservi de l'invention peut être défini plus généralement de la manière suivante :

Pendant la séquence T1, on supprime ou diminue fortement l'interaction des photons et des électrons, afin de maintenir le faisceau d'électrons dans un état à grand gain, ou de le laisser se relaxer, le plus rapidement possible vers cet état à grand gain, s'il part d'un état différent.

Pendant la séquence T2, l'interaction des photons et des électrons est alors rendue maximum, afin qu'une impulsion laser intense se développe. Dans la plupart des cas, la séquence T2 sera plus brève que la séquence T1.

Dans une expérience particulière utilisant ce premier type d'application (stabilisation d'amplitude de crête et de sa période), on a pu obtenir les résultats suivants :

augmentation de la puissance de crête dans un rapport 20 ;

diminution de la largeur des macro-impulsions, qui passe à une milliseconde au lieu des trois millisecondes du fonctionnement naturel ;

conservation de la puissance moyenne du laser si la fréquence des impulsions n'est pas trop faible (10 Hz environ) ;

augmentation de l'énergie de chacune des impulsions laser si le taux de répétition du signal de commande SC est inférieur au taux de répétition naturel ;

possibilité de commander à volonté l'apparition des impulsions du laser en fonction d'un événement extérieur, puisque la séquence T2 peut être déclenchée à n'importe quel moment, dès lors que la séquence T1 précédente a été suffisamment longue pour que le gain devienne supérieur aux pertes ;

possibilité d'obtenir un laser parfaitement périodique et d'amplitude stable ; à noter que le fonctionnement asservi est obtenu à 12 Hz environ alors que le fonctionnement naturel se fait à une période de l'ordre de 80 Hz, et que les fluctuations de l'amplitude de crête, qui étaient de ± 100 % en fonctionnement naturel, sont réduites à ± 5 % en fonctionnement asservi.

Dans le premier type d'application, ci-dessus décrit, la durée de la séquence T2 était supérieure à la largeur naturelle de la macro-impulsion laser, c'est-à-dire que l'on laissait cette macro-impulsion évoluer librement, tandis que les mécanismes de saturation exposés plus haut pouvaient détruire complètement le gain optique, c'est-à-dire le rendre inférieur aux pertes.

Une seconde famille d'applications utilise une réduction de la durée de la séquence T2, de sorte que l'impulsion laser ne se développe pas complètement. Dans ce cas, on peut faire en sorte que le gain demeure toujours supérieur aux pertes.

Cette considération mise à part, le fonctionnement est assez proche de celui décrit précédemment. Toutefois, il a été observé que l'on peut non seulement réduire la durée des séquences T2, mais aussi réduire considérablement celle des séquences T1, car le laser peut redémarrer instantanément puisque l'on a toujours la condition G supérieure à p.

En d'autres termes, il est donc possible d'obtenir un laser pulsé à fréquence assez élevée, sans perdre sensiblement au niveau de la puissance moyenne, pourvu que l'on règle correctement le rapport cyclique T1/T2.

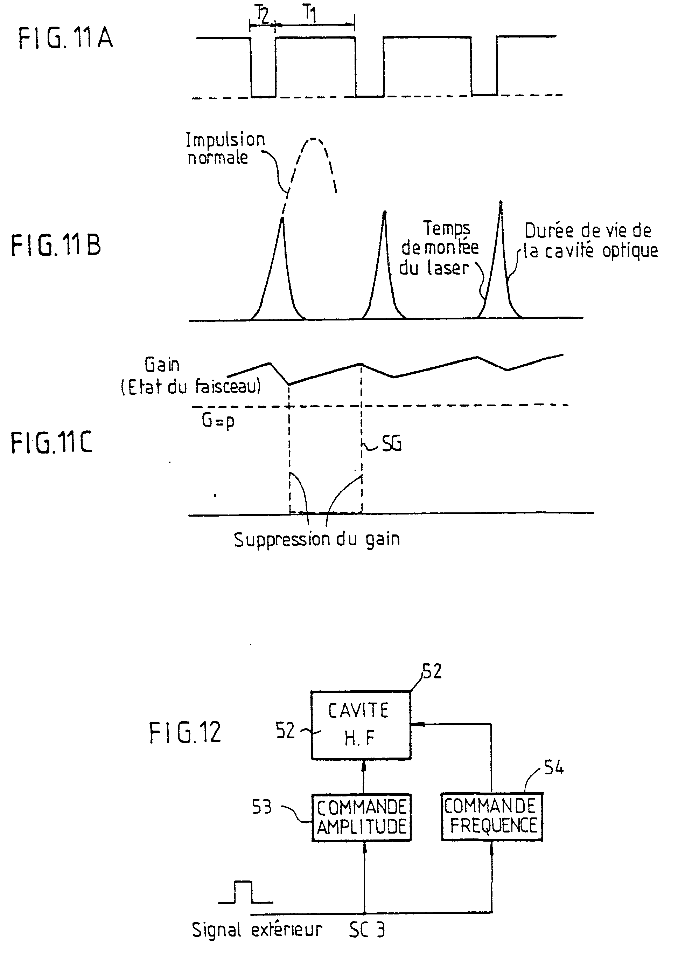

La figure 11A montre un exemple de signal de commande de ce second type. Pendant la séquence T2, un début d'impulsion laser se développe, début qui est tronqué par rapport à l'impulsion laser normale illustrée en tireté sur la figure 11B. Dès la fin de la séquence T2, l'impulsion laser retombe, pendant un temps qui est défini par la «durée de vie de la cavité optique», c'est-à-dire le temps pendant lequel celle-ci peut continuer à opérer en l'absence de gain.

La figure 11C est comparable à la figure 9C, et illustre un gain exprimé en termes d'état du faisceau, tandis que la partie illustrée en trait tireté et référencée SG montre le gain véritable, en tenant compte du fait qu'il n'y a plus d'effet laser pendant la séquence T1 (comme ce fut illustré sur la figure 9B).

Cette figure 11C, en montrant l'état du faisceau, fait apparaître que le gain théorique associé à l'état du faisceau peut demeurer toujours supérieur aux pertes p.

Des expériences conduites de cette manière ont permis un fonctionnement du laser à électrons libres à une fréquence de répétition de l'ordre de 2 kHz, c'est-à-dire 25 fois plus élevée que la fréquence naturelle.

Une autre variante de ce type de fonctionnement a pu être observée, variante qui est d'ailleurs généralisable au premier type de fonctionnement.

Jusqu'à présent, on a considéré qu'il y avait suppression complète du gain du laser pendant la période T1, c'est-à-dire que le laser redémarrait à chaque début de période T2.

Il est possible que, pendant la période T1, l'on diminue le gain (théorique) du laser, c'est-à-dire l'état du faisceau associé à un tel gain, sans l'annuler complètement.

Pourvu que le taux de répétition des impulsions soit assez élevé, le laser à électrons libres adopte alors une structure pseudo-continue, c'est-à-dire que l'effet laser subsiste en permanence, avec une amplitude légèrement fluctuante à cause du « hachage » du gain. Dans ce cas, l'effet de l'asservissement est d'empêcher le laser d'atteindre le niveau de saturation, tout en maintenant pendant la période T1 un gain suffisant pour que le laser ne s'arrête pas.

Ceci réalise une sorte de modulation du laser à électrons libres.

L'invention permet donc bien le fonctionnement d'un laser à électrons ou positrons libres en asservissement sur un phénomène ou un signal qui peut être extérieur ou intérieur. Le fonctionnement obtenu peut être du tir au coup par coup, un fonctionnement impulsionnel, de façon périodique ou apériodique dans une assez large gamme de fréquences, ou même devenir « pseudo-continu ».

Le phénomène extérieur qui commande le laser peut revêtir de très nombreuses formes, depuis le tir au coup par coup en passant par une séquence préétablie jusqu'à l'asservissement pur et simple sur un générateur de fonction permettant d'obtenir un laser parfaitement périodique.

Une variante consiste à utiliser comme phénomène de commande un paramètre associé au fonctionnement du laser ou de l'anneau de stockage lui-même. Dans ce dernier cas, on obtient une sorte de contre-réaction, qui permet de stabiliser le laser, ou bien de le faire auto-osciller, ou bien de déclencher l'effet laser seulement lorsque le paquet d'électrons remplit certaines conditions.

Suivant les applications, les avantages obtenus pourront être divers, mais en règle générale on obtiendra toujours soit une augmentation de la puissance de crête et de sa stabilité, soit une amélioration du taux de répétition des impulsions (qui devient plus souple) et de sa stabilité. Les applications telles que tir au coup par coup ou modulation de l'amplitude à une fréquence donnée se rangent en principe dans les catégories ci-dessus.

Dans ce qui précède, on a décrit différentes applications de l'invention, à partir d'un moyen d'asservissement qui consistait en la modification de la période de rotation des faisceaux ou paquets d'électrons dans l'anneau de stockage.

On considérera maintenant d'autres moyens d'asservissement utilisables selon l'invention, et donnés à titre non limitatif.

Les moyens d'asservissement décrits plus haut ont l'avantage de permettre une commutation très rapide entre les états T1 et T2. Ils sont plus difficilement utilisables pour une modification progressive du gain.

D'autres moyens d'asservissement permettent une modification de la densité électronique.

Ainsi, on peut tout d'abord modifier les dimensions transversales du faisceau d'électrons. Il est connu d'exciter le faisceau d'électrons par une source de signal aléatoire (« bruit »). On augmente ainsi les dimensions transversales du faisceau d'électrons. La présente invention consiste alors à commander l'amplitude du bruit par le signal extérieur SC ou SC2, de façon à produire une diminution du gain optique.

Sur un anneau de stockage, on définit un point de fonctionnement, pour lequel les caractéristiques du paquet d'électrons sont déterminées par les éléments de l'anneau tels que sa cavité haute fréquence, ses éléments focalisants, ainsi que ses éléments de réglage des nombres d'ondes, quadrupoles et hexapoles, notamment. On peut alors modifier l'un de ces éléments, convenablement choisi, pour provoquer un changement de la densité électronique, de la dispersion en énergie des électrons, de la longueur du paquet d'électrons, ou même pour modifier la trajectoire du paquet d'électrons à l'intérieur de l'anneau, de façon qu'il ne passe plus exactement dans l'axe de la cavité optique.

Ces modifications de l'état du faisceau d'électrons peuvent être utilisées de deux manières différentes.

Par le signal de commande extérieure SC ou SC2, on agit sur l'une des caractéristiques de l'anneau pour diminuer le gain temporairement comme dans les descriptions précédentes.

Toutefois, il est également envisageable de commander certaines caractéristiques de l'anneau de façon à augmenter le gain, soit par augmentation de la densité électronique, soit par diminution de la dispersion en énergie des électrons.

En agissant de cette manière, et en permanence, sur une caractéristique de l'anneau, on définit un nouvel « état normal » des paquets d'électrons, à partir duquel on peut réaliser un asservissement par diminution temporaire du gain de la manière précédemment décrite.

Par contre, dans certains cas, ce nouvel « état normal » ne peut être obtenu que pendant une durée limitée, et l'asservissement nécessite alors une double commande.

Par exemple, on utilisera le dispositif illustré sur la figure 12. La cavité haute fréquence 52 est maintenant commandée en fréquence comme précédemment par un oscillateur 54, mais aussi en amplitude par un organe 53. Les organes 53 et 54 sont tous deux sous le contrôle d'un signal extérieur SC3.

On sait que la cavité haute fréquence placée sur l'anneau a notamment pour fonction de redonner au paquet d'électrons l'énergie qu'ils ont perdue à chaque tour. La fréquence de la cavité détermine la période de rotation, tandis que l'amplitude du champ haute fréquence appliquée par cette cavité aux électrons détermine la longueur du paquet d'électrons, et agit sur sa dispersion en énergie, ainsi que sur ses dimensions transverses, et sur sa dispersion angulaire de vitesse.

La commande illustrée sur la figure 12 agit simultanément sur l'amplitude et sur la fréquence du champ électromagnétique appliquées aux paquets d'électrons, afin de synchroniser d'une part les électrons et les photons au niveau de la cavité optique, et aussi de provoquer une augmentation du gain par surtension de la cavité haute fréquence. On peut ainsi obtenir des puissances de crête encore plus importantes.

En bref, pendant les périodes T1, on réalise à la fois une désynchronisation des électrons par rapport aux photons, et un retour de la cavité haute fréquence à son niveau de gain normal, afin de laisser le paquet d'électrons se relaxer naturellement. Pendant les périodes T2, on rétablit en même temps la synchronisation et un gain supérieur à celui correspondant au niveau normal.

D'autres moyens d'asservissement peuvent être réalisés en modifiant la position relative de la trajectoire moyenne des paquets d'électrons relativement à l'axe optique de la cavité 3.

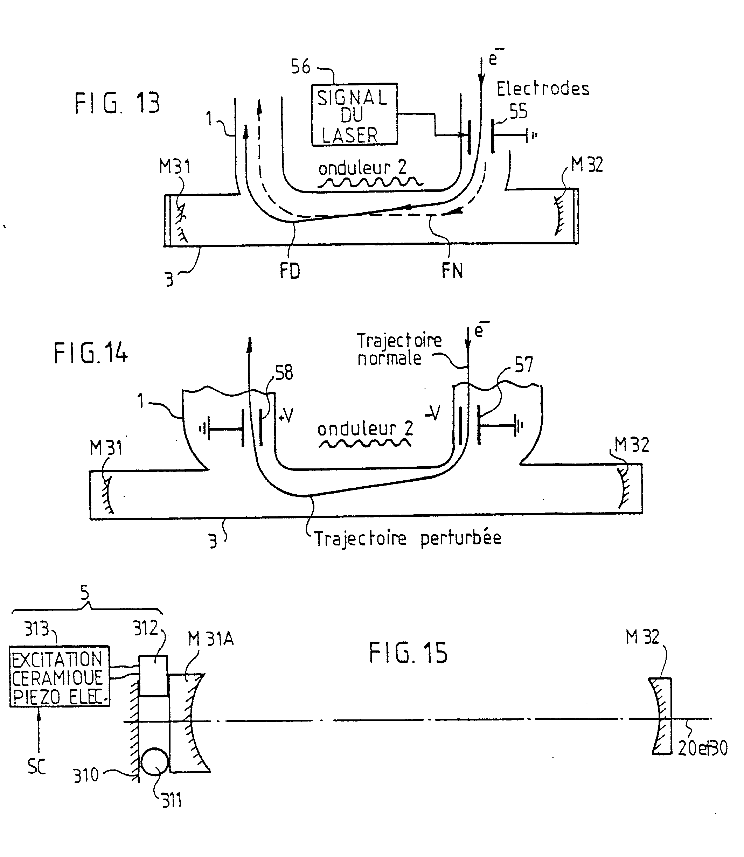

La figure 13 illustre schématiquement que, dans l'anneau 1, sont placées deux électrodes 55, excitées par un signal de commande 56. Ces électrodes sont réalisées de manière telle que le faisceau d'électrons soit dévié selon la trajectoire en trait plein FD, par rapport à la trajectoire initiale ou normale FN. Le signal de commande 56 possède l'une des formes SC ou SC2 décrites plus haut. Pendant les intervalles de temps T1, la trajectoire des paquets d'électrons est FD, il n'y a pas d'effet laser, et les paquets d'électrons relaxent vers un état correspondant à un gain théorique élevé. Pendant les intervalles de temps T2, les paquets d'électrons retrouvent leur trajectoire normale FN, et l'effet laser se produit, d'une manière comparable à ce qui a été décrit plus haut.

Bien entendu, la figure 13 n'est qu'une illustration très schématique, et il sera souvent nécessaire d'utiliser plusieurs jeux d'électrodes, disposés tout le long de l'anneau, afin d'assurer simultanément la déviation de trajectoire désirée au niveau de l'onduleur 2, et une trajectoire correcte des paquets d'électrons dans le reste de l'anneau.

En pratique, on a réalisé ufne déviation de l'ordre de 0,2 mm entre les trajectoires FD et FN, par application de 200 Volts sur les jeux d'électrodes, et une telle déviation a suffi à arrêter le laser.

Ce moyen permet non seulement une variation rapide du gain, mais aussi une diminution progressive de celui-ci selon la tension appliquée. et permet donc aussi bien une commutation tout ou rien qu'une contre-réaction plus progressive.

Bien entendu, les électrodes produisant un champ électrique déviateur peuvent être remplacées par des bobines produisant un champ magnétique de déviation, comme le sait l'homme de l'art.

La figure 14 illustre une variante de la figure 13,

9

dans laquelle on a placé de part et d'autre de l'onduleur 2 des jeux d'électrodes 57 et 58 alimentés par des tensions opposées — V et + V, ces électrodes permettent d'assurer un découplage total entre la trajectoire des électrons dans l'onduleur et la trajectoire des paquets d'électrons dans le reste de l'anneau, qui demeurent alors disponibles pour d'autres expériences.

La figure 15 illustre une autre variante des moyens d'asservissement, dans lesquels on agit sur l'axe optique de la cavité. L'un (au moins) des miroirs, ici le miroir M31A, possède un point d'appui bas fixe défini par un support 311 solidaire d'un bâti 310. Son point d'appui supérieur est, au contraire, défini par une céramique piézoélectrique 312 alimentée par un circuit d'excitation 313. Un signal du type SC ou SC2 est appliqué au circuit 313, afin de réaliser ou non l'excitation de la céramique. Lorsque la céramique est excitée, le miroir M31A est sujet à des oscillations par rapport à l'axe optique 30, qui produisent un désalignement de la cavité optique, qui ne peut plus fonctionner. Ainsi, les périodes T1 correspondent à une telle désexcitation de la cavité, tandis que la céramique pézo-électrique est arrêtée pendant les périodes T2.

Une variante immédiate consisterait à monter le miroir M31A dans son ensemble sur une céramique telle que 312, de façon à moduler la longueur de la cavité, au lieu de produire une inclinaison de l'axe du miroir M31A sur l'axe 30 de la cavité.

Les expériences conduites utilisent des miroirs possédant un rayon de courbure de 3 mètres, pour une longueur de la cavité d'environ 5,5 mètres. Il a été observé qu'il suffit de faire pivoter un miroir de $2.10^{-4}$ radians pour stopper le laser (à partir d'un déplacement mécanique progressif, dans une expérience).

Il est également possible d'agir sur les pertes de la cavité optique, en les modifiant de différentes façons. On a décrit ci-dessus des modifications de la trajectoire optique dans la cavité, ou bien des modifications de l'axe optique de la cavité. Lorsqu'elles sont d'amplitude suffisante, ces modifications peuvent introduire des pertes par diffraction au niveau des miroirs, ou même provoquer le déstockage complet des photons.

Une autre façon de faire consiste à introduire un élément absorbant dans la cavité optique, dont l'exemple le plus simple serait un obturateur mécanique, ou même une simple lame transparente introduisant des pertes par réflexion. On peut également introduire un élément qui dévie les photons (miroir ou prisme) afin qu'ils n'atteignent plus les miroirs d'extrémité. L'homme de l'art connaît de nombreux dispositifs de ce genre utilisables dans la cavité optique.

Il a été indiqué plus haut que les lasers à électrons libres possèdent la propriété d'être accordables d'une manière continue dans un vaste domaine de longueurs d'ondes ou fréquences lumineuses. On a également indiqué que cette variation de longueurs d'ondes s'obtient principalement par modification de l'énergie des électrons et/ou de l'amplitude du champ magnétique dans l'onduleur (ou plus généralement du paramètre de commande de l'onduleur).

Il est alors possible d'introduire dans la cavité un système dispersif (c'est-à-dire sélectif en fréquence) qui accorde le laser sur une longueur d'onde donnée. Dans ce cas, toute modification de l'énergie ou du champ dans l'onduleur pourra provoquer l'arrêt du laser, et il suffit ainsi de modifier l'énergie ou le champ dans l'onduleur selon l'un ou l'autre des signaux SC ou SC2 décrits plus haut.

Dans la description donnée jusqu'à présent, la source d'électrons utilisée était un anneau de stockage, c'est-à-dire un accélérateur bouclé dans lequel les mêmes paquets d'électrons vont rayonner à chaque passage dans l'onduleur. Il s'agit du mode de réalisation préféré de l'invention.

Toutefois, on peut faire fonctionner en mode bouclé des accélérateurs qui ne le sont pas intrinsèquement. Il est ainsi possible de boucler sur lui-même un accélérateur électromagnétique linéaire, ou encore un accélérateur électrostatique.

## Revendications

1. Laser du type dit à électrons libres, comprenant :

— des moyens accélérateurs de particules chargées (1) de type bouclé comprenant un anneau de stockage desdites particules possédant au moins une section en ligne droite (18), et agencés pour amener périodiquement dans cette section un paquet d'électrons ou positrons (P11, P12) portés à une énergie relativiste,

— un onduleur (2), monté coaxialement le long de cette section en ligne droite (18) et propre à moduler, de manière répétitive dans l'espace, l'accélération des électrons qui y passent, ce qui leur fait engendrer un faisceau de lumière sensiblement colinéaire à l'axe (20) de l'onduleur, et

— une cavité optique (3), définie par deux miroirs (M31, M32) montés en regard l'un de l'autre, de part et d'autre de l'onduleur (2) pour permettre l'aller-retour de la lumière ainsi émise,

— si bien qu'une amplification laser à photons cohérents peut apparaître lorsque la période de cet aller-retour de lumière coïncide avec la période de passage des paquets d'électrons et que le gain optique par passage de paquets d'électrons dépasse les pertes de lumière intervenant dans la cavité optique entre deux passages, caractérisé par des moyens d'ajustement (5) agissant sur le laser pour faire varier de manière contrôlée dans le temps l'interaction électrons/photons, ces moyens possédant un premier état (T1) dans lequel ils altèrent les conditions optimales pour l'amplification laser, et un second état (T2) dans lequel ils rétablissent ces mêmes conditions, ce qui permet un asservissement du laser, en même temps qu'une amélioration de l'un au moins des paramètres comprenant : l'amplitude de crête des impulsions laser, sa stabilité, le taux de répétition des impulsions laser, et sa stabilité.

2. Laser selon la revendication 1, caractérisé en ce que les deux états (T1, T2) sont alternés.

3. Laser selon la revendication 2, caractérisé en ce que les deux états (T1, T2) sont alternés de manière périodique ou quasi périodique.

4. Laser selon l'une des revendications 1 et 2, caractérisé en ce que la durée du premier état (T1) est choisie en fonction d'un temps de relaxation observé pour les paquets d'électrons.

5. Laser selon la revendication 4, caractérisé en ce que la durée du premier état (T1) est choisie suffisamment longue pour augmenter l'amplitude de crête des macro-impulsions du laser.

6. Laser selon l'une des revendications 3 à 5, caractérisé en ce que la durée du second état (T2) est inférieure à la durée naturelle des macro-impulsions du laser.

7. Laser selon l'une des revendications 3 à 6, caractérisé en ce que, dans le premier état (T1), il n'y a pratiquement aucune amplification laser.

8. Laser selon la revendication 6, caractérisé en ce que, dans le premier état (T1), il demeure une amplification laser moindre, ce qui permet une modulation du laser.

9. Laser selon l'une des revendications précédentes, caractérisé en ce que les moyens d'ajustement (5) agissent sur l'une au moins des caractéristiques des paquets d'électrons, qui comprennent leur géométrie, leur dispersion énergétique, et leur trajectoire dans l'onduleur.

10. Laser selon l'une des revendications précédentes, caractérisé en ce que les moyens d'asservissement (5) agissent sur le taux de répétition des paquets d'électrons.

11. Laser selon l'une des revendications 9 et 10, caractérisé en ce que les moyens d'ajustement (5) comprennent une cavité haute fréquence (52), incorporée à l'anneau de stockage (1), et recevant un signal de commande externe de haute fréquence (50).

12. Laser selon l'une des revendications précédentes, caractérisé en ce que les moyens d'ajustement comportent des moyens (55, 56 ; 57, 58) propres à décaler sur commande l'axe de passage moyen des électrons relativement à l'axe de l'onduleur.

13. Laser selon la revendication 12, caractérisé en ce que les moyens de décalage (55 ; 17, 18) appliquent un champ électrique et/ou magnétique commutable sur commande, aux paquets d'électrons.

14. Laser selon l'une des revendications précédentes, caractérisé en ce que les moyens d'ajustement (5) agissent sur l'une au moins des caractéristiques optiques de la cavité, qui comprennent sa longueur, la direction de son axe optique, et ses pertes.

15. Laser selon la revendication 14, caractérisé en ce que l'un au moins (M 31A) des miroirs de la cavité est monté sur une céramique piézo-électrique (312), susceptible, sur commande, d'être excitée (313) pour faire varier la position axiale ou la direction de ce miroir.

16. Laser selon la revendication 14, caractérisé en ce que la cavité optique est rendue dispersible en fréquences optiques, et en ce que les moyens d'asservissement agissent sur le rapport entre l'énergie des électrons et l'amplitude de la modulation d'accélération apportée par l'onduleur.

17. Laser selon l'une des revendications précédentes, caractérisé en ce que l'onduleur (2) comprend une structure magnétique périodique (21, 22) qui s'étend selon l'axe de la cavité optique et procure un champ magnétique stationnaire réglable en amplitude et de période spatiale choisie.

18. Laser selon l'une des revendications précédentes, caractérisé en ce que les moyens d'asservissement (5) réagissent à un signal représentatif de l'un des paramètres de fonctionnement du laser.

**Claims**

1. A laser of the so-called free electron type, comprising : charged particle accelerator means (1) of the loop type comprising a storage ring for said particles possessing at least one straight line section (18) and arranged to periodically bring a packet of electrons or positrons (P11, P12) raised to relativistic energy into said section ;

an undulator (2) mounted coaxially along said straight line section (18) and suitable for modulating the acceleration of the electrons passing therethrough, said modulation being repetitive in space, thereby causing the particles to give rise to a light beam which is substantially coaxial with the axis (20) of the undulator ; and

an optical cavity (3) defined by two mirrors (M31, M32) mounted facing each other at opposite ends of the undulator (2) in order to enable the light emitted in this way to travel back-and-forth ;

such that coherent photon laser amplification may appear when the period of said back-and-forth light travel coincides with the period at which packets of electrons pass, and when the optical gain due to the passing of the packets of electrons exceeds the light losses that occur in the optical cavity between two passes ;

characterized by adjustment means (5) acting on the laser to vary the electron/photon interaction in a time-controlled manner, said means possessing a first state (T1) in which they degrade optimum conditions for laser amplification and a second state (T2) in which they re-establish such conditions, thereby enabling the laser to be servo-controlled, while simultaneously improving at least one of the parameters comprising : laser pulse peak amplitude ; amplitude stability ; laser pulse repetition rate ; and repetition rate stability.

2. A laser according to claim 1, characterized in that the two states (T1, T2) alternate.

3. A laser according to claim 2, characterized in that the two states (T1, T2) alternate periodically or quasi-periodically.

4. A laser according to claim 1 or 2, characterized in that the duration of the first state (T1) is chosen as a function of a relaxation time observed for the packets of electrons.

5. A laser according to claim 4, characterized in that the duration of the first state (T1) is selected to be sufficiently long to increase the peak amplitude of the laser macro-pulses.

6. A laser according to any one of claims 3 to 5, characterized in that the duration of the second state (T2) is less than the natural duration of the laser macro-pulses.

7. A laser according to any one of claims 3 to 6, characterized in that during the first state (T1) there is substantially no laser amplification.

8. A laser according to claim 6, characterized in that during the first state (T1) a reduced degree of laser amplification subsists, thereby enabling the laser to be modulated.

9. A laser according to any preceding claim, characterized in that the adjustment means (5) act on at least one of the characteristics of the packets of electrons comprising : their geometry ; their energy dispersion ; and their trajectory through the undulator.

10. A laser according to any preceding claim, characterized in that the servo-control means (5) acts on the repetition rate of the packets of electrons.

11. A laser according to claim 9 or 10, characterized in that the adjustment means (5) comprise a high frequency cavity (52) incorporated in the storage ring (1) and receiving a high frequency external control signal (50).

12. A laser according to any preceding claim, characterized in that the adjustment means comprise means (50, 56 ; 57, 58) suitable, on command, for shifting the mean travel axis of the electrons relative to the axis of the undulator.

13. A laser according to claim 12, characterized in that the shifting means (55 ; 17, 18) apply an electric and/or magnetic field to the packets of electrons, said field being switchable on command.

14. A laser according to any preceding claim, characterized in that the adjustment means (5) act on at least one of the optical characteristics of the cavity, comprising : its length ; the direction of its optical axis ; and its losses.

15. A laser according to claim 14, characterized in that at least one M31A) of the mirrors of the cavity is mounted on a piezoelectric ceramic mount (312) suitable for being excited (313) on command in order to vary the axial position or the direction of said mirror.

16. A laser according to claim 14, characterized in that the optical cavity is made dispersive at optical frequencies, and in that the servo-control means act on the ratio between the electron energy and the amplitude of the acceleration modulation provided by the undulator.

17. A laser according to any preceding claim, characterized in that the undulator (2) comprises a periodic magnetic structure (21, 22) extending along the axis of the optical cavity and establishing a stationary magnetic field which is adjustable in amplitude and of selected space period.

18. A laser according to any preceding claim, characterized in that the servo-control means (5) react to a signal representative of one of the operating parameters of the laser.


**Patentansprüche**

1. Laser mit freien Elektronen, mit :
— Beschleunigungsmitteln für Ladungsteilchen (1) vom Schleifentyp, die einen Ring zur Speicherung der vorgenannten Teilchen mit wenigstens einem geradlinigen Abschnitt (18) umfassen und eingerichtet sind, um ein auf eine relativistische Energie gebrachtes Elektronen- oder Positronpaket (P11, P12) periodisch in diesen Abschnitt zu bringen,
— einem koaxial entlang diesem geradlinigen Abschnitt (18) angeordneten Wellenformer (2), der dazu geeignet ist, die Beschleunigung der darin durchlaufenden Elektronen in räumlich repetitiver Weise zu modulieren, wodurch sie einen Lichtstrahl erzeugen, der merklich kolinear zur Achse (20) des Wellenformers verläuft, und
— einem optischen Hohlraum (3), der durch zwei Spiegel (M31, M32) definiert ist, die einander gegenüberliegend beiderseits des Wellenformers (2) montiert sind, um den Vor- und Rücklauf des somit emittierten Lichtes zu ermöglichen,
— so dass eine Laserverstärkung mit kohärenten Photonen entstehen kann, wenn die Periode dieses Vor- und Rücklaufes des Lichtes mit der Durchlaufzeit der Elektronenpakete zusammenfällt und die Lichtverstärkung pro Durchlauf der Elektronenpakete die Lichtverluste in dem optischen Hohlraum zwischen zwei Durchläufen überschreitet, dadurch gekennzeichnet, dass er Einstellmittel (5) umfasst, die im Sinne einer zeitlich kontrollierten Änderung der Wechselwirkung Elektronen/Photonen auf den Laser einwirken, wobei diese Mittel einen ersten Zustand (T1) besitzen, in dem sie die optimalen Bedingungen für die Laserverstärkung verändern, sowie einen zweiten Zustand (T2), in dem sie diese selben Bedingungen wiederherstellen, was zugleich eine Steuerung des Lasers und eine Verbesserung von wenigstens einem der Parameter gestattet, welche die Spitzenamplitude der Laserimpulse, ihre Stabilität, den Wiederholungsgrad der Laserimpulse und seine Stabilität umfassen.

2. Laser nach Anspruch 1, dadurch gekennzeichnet, dass die beiden Zustände (T1, T2) regelmässig abwechseln.

3. Laser nach Anspruch 2, dadurch gekennzeichnet, dass die beiden Zustände (T1, T2) periodisch oder quasiperiodisch wechseln.

4. Laser nach einem der Ansprüche 1 und 2, dadurch gekennzeichnet, dass die Dauer des ersten Zustandes (T1) in Abhängigkeit von einer für die Elektronenpakete beobachteten Relaxationszeit gewählt wird.

5. Laser nach Anspruch 4, dadurch gekennzeichnet, dass die Dauer des ersten Zustandes (T1) hinreichend lang gewählt wird, um die Spitzenamplitude der Makroimpulse des Lasers zu erhöhen.

6. Laser nach einem der Ansprüche 3 bis 5, dadurch gekennzeichnet, dass die Dauer des zweiten Zustandes (T2) kürzer ist als die natürliche Dauer der Makroimpulse des Lasers.

7. Laser nach einem der Ansprüche 3 bis 6, dadurch gekennzeichnet, dass in dem ersten Zustand (T1) praktisch keine Laserverstärkung erfolgt.

8. Laser nach Anspruch 6, dadurch gekennzeichnet, dass in dem ersten Zustand (T1) eine geringere Laserverstärkung verbleibt, was eine Modulation des Lasers ermöglicht.

9. Laser nach einem der vorstehenden Ansprüche, dadurch gekennzeichnet, dass die Einstellmittel (5) auf wenigstens eines der Kenndaten der Elektronenpakete einwirken, die ihre Geometrie, ihre Energiestreuung und ihre Bahn im Wellenformer umfassen.

10. Laser nach einem der vorstehenden Ansprüche, dadurch gekennzeichnet, dass die Steuerungsmittel (5) auf den Wiederholungsgrad der Elektronenpakete einwirken.

11. Laser nach einem der Ansprüche 9 und 10, dadurch gekennzeichnet, dass die Einstellmittel (5) einen Hochfrequenz-Hohlraum (52) umfassen, der in den Speicherring (1) eingebaut ist und ein von aussen angelegtes Hochfrequenz-Steuersignal (50) erhält.

12. Laser nach einem der vorstehenden Ansprüche, dadurch gekennzeichnet, dass die Einstellmittel Organe (55, 56 ; 57, 58) umfassen, die imstande sind, auf Befehl die Durchlaufachse der Elektronen im Verhältnis zur Achse des Wellenformers zu verschieben.

13. Laser nach Anspruch 12, dadurch gekennzeichnet, dass die Verschiebungsorgane (55 , 17, 18) die Elektronenpakete auf Befehl einem umschaltbaren elektrischen und/oder magnetischen Feld unterwerfen.

14. Laser nach einem der vorstehenden Ansprüche, dadurch gekennzeichnet, dass die Einstellmittel (5) auf wenigstens eines der optischen Kenndaten des Hohlraumes einwirken, welche seine Länge, die Richtung seiner optischen Achse und seine Verluste umfassen.

15. Laser nach Anspruch 14, dadurch gekennzeichnet, dass wenigstens einer (M31A) der Hohlraumspiegel auf einem piezoelektrische Keramikbaustein (312) montiert ist, der auf Befehl erregt werden kann (313), um die axiale Stellung oder Ausrichtung dieses Spiegels zu verändern.

16. Laser nach Anspruch 14, dadurch gekennzeichnet, dass der optische Hohlraum für Lichtfrequenzen streuend gemacht ist, und dass die Steuerungsorgane auf das Verhältnis zwischen der Energie der Elektronen und der Amplitude der von dem Wellenformer erbrachten Beschleunigungsmodulation einwirken.

17. Laser nach einem der vorstehenden Ansprüche, dadurch gekennzeichnet, dass der Wellenformer (2) eine periodische Magnetstruktur (21, 22) aufweist, die sich gemäss der Achse des optischen Hohlraums erstreckt und ein amplitudenmässig einstellbares, stationäres Magnetfeld mit gewählter Raumperiode erzeugt.

18. Laser nach einem der vorstehenden Ansprüche, dadurch gekennzeichnet, dass die Steuerungsorgane (5) auf ein für einen der Betriebsparameter des Lasers repräsentatives Signal reagieren.

FIG. 1

FIG.2

AIMANTS

$21\_1$  $21\_2$  $21\_3$  $21\_(n\_1)$  $21\_(n)$

2

+ − + − +

B(z)

z

y

− + − + −

$22\_1$  $22\_2$  $22\_3$  $22\_(n\_1)$  $22\_(n)$

$\lambda o$

FIG.3

x

$\varphi$

photons

0

$\Theta$

z

e

B

y

electron

FIG.4A

Lr

X

Lv

$\lambda = c^{\underline{te}}$

repère
electron

z

X = mrad

repère
laboratoire

FIG.4B

Lr

Lv

z

FIG. 5

37ns

FIG. 6A

Structure à 37 nsec

Laser macro_impulsion

2 a 3 msec

FIG. 6 B

Gmax

G=p

Gain

Gmin

FIG. 7A

10 à 15 msec

Laser

FIG. 7B

G=p (Laser max)

G=p (laser min)

G max

G=p

Gain

G min

RN

FIG. 8

GENERATEUR
EXTERNE
COMMANDANT L'
OSCILLAT. LOCAL

50

OSCILLATEUR
LOCAL

51

52

e⁻

1

Cavité R.F.

FIG. 9A

T1

T1

T2

T2

t

FIG. 9B

t

FIG. 9C

RA

G = p

t

FIG. 9D

G = p

t

FIG. 10

13 m sec

FIG. 10A

$T_1$   $T_1$   $T_1$

$T_2$   $T_2$

FIG. 10 B

80 m sec

FIG. 11 A

FIG. 11 B

Impulsion normale

Temps de montée du laser

Durée de vie de la cavité optique

FIG. 11 C

Gain (Etat du faisceau)

$G = p$

SG

Suppression du gain

FIG. 12

52

CAVITE H. F

53 COMMANDE AMPLITUDE

COMMANDE FREQUENCE 54

Signal extérieur    SC 3

6

FIG. 13

56

SIGNAL
DU
LASER

e⁻

Electrodes
55

1

onduleur 2

M31

M32

3

FD

FN

FIG.14

Trajectoire
normale

e⁻

58

57

1

+V

onduleur 2

-V

M31

M32

3

Trajectoire perturbée

5

313

312

M 31A

FIG. 15

M 32

EXCITATION
CERAMIQUE
PIEZO ELEC.

SC

310

311

20 et 30

7